(19) Europäisches Patentamt
European Patent Office
Office européen des brevets

(11) **EP 3 691 882 B1**

(12) **FASCICULE DE BREVET EUROPEEN**

(45) Date de publication et mention de la délivrance du brevet:
**04.01.2023 Bulletin 2023/01**

(21) Numéro de dépôt: **18778929.2**

(22) Date de dépôt: **02.10.2018**

(51) Classification Internationale des Brevets (IPC):
**B29C 48/07** $^{(2019.01)}$ **B29C 48/30** $^{(2019.01)}$
**B29C 48/35** $^{(2019.01)}$ **B29C 48/49** $^{(2019.01)}$
**B29C 48/21** $^{(2019.01)}$ B29C 48/12 $^{(2019.01)}$
B29D 30/52 $^{(2006.01)}$

(52) Classification Coopérative des Brevets (CPC):
**B29D 30/52; B29C 48/07; B29C 48/21;**
**B29C 48/3001; B29C 48/35; B29C 48/49;**
B29C 48/12; B29C 48/307; B29L 2030/00

(86) Numéro de dépôt international:
**PCT/EP2018/076802**

(87) Numéro de publication internationale:
**WO 2019/068716 (11.04.2019 Gazette 2019/15)**

(54) **TÊTE D'EXTRUSION D'UN PROFILÉ COMPLEXE COMPRENANT UN INSERT DANS UN MÉLANGE FORTEMENT ÉLASTIQUE**

KOPF ZUM EXTRUDIEREN EINES KOMPLEXEN PROFILABSCHNITTS MIT EINEM EINSATZ AUS EINER HOCHELASTISCHEN MISCHUNG

HEAD FOR EXTRUDING A COMPLEX PROFILE SECTION COMPRISING AN INSERT IN A HIGHLY ELASTIC MIXTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.10.2017 FR 1759255**

(43) Date de publication de la demande:
**12.08.2020 Bulletin 2020/33**

(73) Titulaire: **Compagnie Générale des Etablissements Michelin**
**63000 Clermont-Ferrand (FR)**

(72) Inventeurs:
• **RABHI, Mohamed**
**Clermont-Ferrand Cedex 9 (FR)**
• **ROUBY, Mickael**
**63040 Clermont-Ferrand Cedex 9 (FR)**

(74) Mandataire: **Redouté, Gilles Pierre**
**M. F. P. Michelin**
**Service juridique - Propriété Intellectuelle**
**DCJ/PI - F35 - Site de Ladoux**
**23, place des Carmes-Déchaux**
**63040 Clermont-Ferrand Cedex 9 (FR)**

(56) Documents cités:
| | |
|---|---|
| WO-A1-2017/109392 | WO-A1-2017/109393 |
| DE-A1- 4 019 186 | JP-A- 2009 202 569 |
| KR-B1- 101 405 064 | US-B1- 6 695 606 |

**Description**

L'invention se situe dans le domaine de l'extrusion d'une bande profilée continue d'un matériau à base de caoutchouc, destinée en particulier à la fabrication des pneumatiques.

Plus particulièrement, l'invention concerne l'extrusion de profilés complexes composés de l'assemblage de plusieurs profilés, réalisés à partir de mélanges de caoutchouc non vulcanisés de compositions différentes. Comme décrit dans les publications WO2017/109393 A1 et KR 101405064 B1, ces profilés complexes sont obtenus de manière connue à l'aide d'une machine de coextrusion mettant en oeuvre plusieurs extrudeuses débouchant dans une voûte de mise en pression, et comprenant plusieurs lames de profilages disposées en amont d'une lame de profilage aval dans l'entrefer de laquelle s'effectue la mise en joint finale des différents profilés.

Ces profilés complexes sont utilisés en particulier pour la réalisation des bandes de roulement.

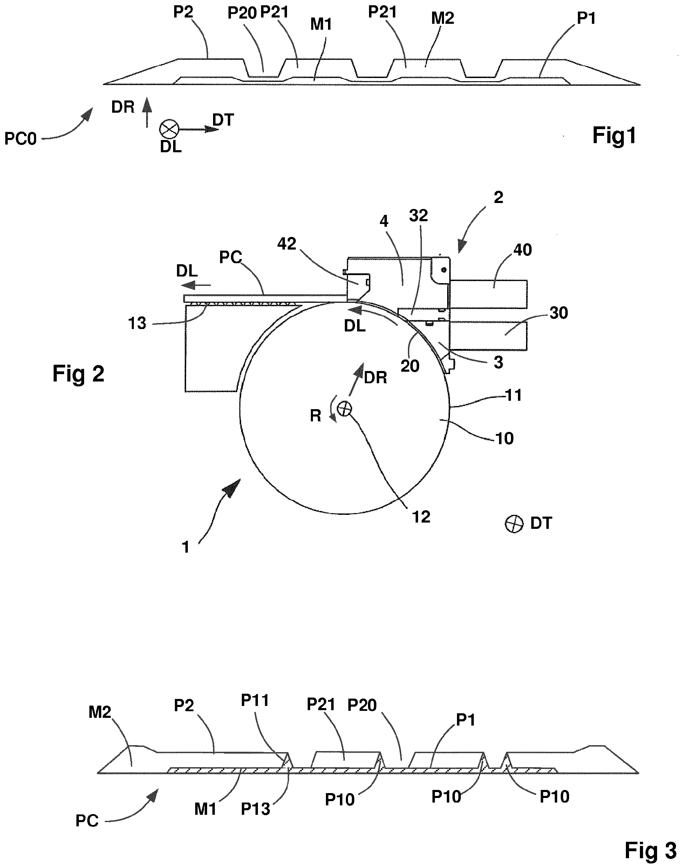

La coupe transversale d'un profilé complexe PC0 est illustrée à la figure 1. Un premier profilé radialement interne P1 formé d'un mélange M1 constitue la sous-couche, un second profilé P2, formé d'un mélange M2 préfigure la bande de roulement destinée à venir en contact avec le sol. Des rainures longitudinales P20, préfigurant les sillons longitudinaux du pneumatique, sont placées entre des cordons longitudinaux P21 dans lesquels sont moulés les pains formant la sculpture finale du pneumatique.

Au cours de l'assemblage d'une ébauche de pneumatique, on coiffe l'ébauche de pneumatique en forme de tore d'un tronçon de bande prélevé dans une bande continue obtenue à l'aide de la machine de coextrusion.

Il est également connu d'utiliser des machines comprenant une tête de coextrusion pour réaliser des profils complexes comprenant un insert localisé. Ces machines ont été développées à l'apparition des mélanges à base de silice faiblement conducteurs de l'électricité pour répondre au problème d'écoulement des charges électriques du véhicule.

Ainsi, la publication EP1448355 décrit une machine de coextrusion comportant un rouleau et une tête d'extrusion comprenant au moins deux canaux d'écoulement d'un mélange caoutchouteux de sous-couche et d'un mélange caoutchouteux de bande de roulement, lesdits canaux débouchant sur un orifice d'extrusion au travers duquel sont refoulés les deux mélanges caoutchouteux de sous-couche et de bande de roulement.

La tête d'extrusion comprend également une micro-extrudeuse d'un troisième mélange caoutchouteux, électriquement conducteur, munie à son extrémité d'une buse, traversant les deux canaux d'écoulement, de sorte que le troisième mélange caoutchouteux électriquement conducteur est inséré dans les mélanges caoutchouteux de sous-couche et de bande de roulement en amont de l'orifice d'extrusion aval.

La publication EP 0 925 903 décrit une machine de coextrusion dite à nez plat (sans rouleau), comportant une tête d'extrusion comprenant un premier passage pour l'extrusion de la bande de roulement, et un second passage pour l'extrusion de la sous-couche considérée comme conductrice de l'électricité. Un troisième passage, disposé en dérivation du second passage, débouche sur une ouverture en fente disposée en arrière de l'orifice d'extrusion de manière à former une bande étroite conductrice de l'électricité traversant la partie de la bande de roulement faiblement conductrice de l'électricité.

L'invention s'intéresse également à la fabrication de profilés complexes destinés à former la bande de roulement d'un pneumatique et comprenant un ou plusieurs inserts. Ces bandes de roulement d'un type nouveau, qui sont décrites par exemple dans la publication WO2016/202703, comprennent des éléments d'amarrage destinés à renforcer les blocs de structure en cas de sollicitation transversale du pneumatique.

La tête d'extrusion selon l'invention a pour objet de fournir une alternative de réalisation des bandes de roulement comprenant des inserts destinés à constituer les éléments d'amarrage du pneumatique, lorsque le mélange formant les inserts est de même nature que celui formant la sous-couche, ce profilé complexe comprend donc un premier mélange destiné à former la partie du pneumatique en contact avec le sol et des inserts formés à partir du mélange utilisés pour la sous-couche et disposés en bordure des sillons de la bande de roulement. Une bande de roulement de ce type est illustrée à la figure 3.

L'invention concerne plus particulièrement la réalisation de bandes de roulement du type ci-dessus, dans lesquelles le mélange formant la bande de roulement est de nature décohésive. On entend ici par décohésif, la qualité d'un mélange caoutchouteux non vulcanisé à présenter, en plus des caractéristiques visqueuses, des caractéristiques élastiques importantes, et dans le cas présent très supérieures aux caractéristiques élastiques du matériau utilisé pour former la sous-couche et les inserts.

Il a été mis en évidence que, lorsque l'on cherche à introduire un insert dans une bande de roulement réalisée à l'aide d'un mélange non vulcanisé de type décohésif, la géométrie de l'insert est fortement modifiée et difficilement maitrisable en raison des mouvements élastiques survenant dans le mélange décohésif à son passage sous la lame de profilage aval.

L'invention a pour objet d'apporter une solution originale à ce type de problème.

La tête d'extrusion d'un profilé complexe selon l'invention est destinée à être montée sur une machine de coextrusion, dans laquelle les profilés progressent dans une cavité d'extrusion selon un sens d'extrusion allant de l'amont vers l'aval en définissant une direction longitudinale. Ladite tête d'extrusion comprend une paroi inférieure délimitant en partie ladite cavité d'extrusion et, en progressant de l'amont vers l'aval de ladite paroi inférieure dans la direction longitudinale :

- un bloc d'extrusion amont d'un premier mélange comportant un canal d'extrusion amont, placé en sortie d'une extrudeuse amont, et débouchant dans la paroi inférieure,
- une lame de profilage amont, disposée transversalement en aval du canal d'extrusion amont définissant la partie profilée d'un entrefer pour déterminer un premier profil transversal d'un premier profilé,
- un bloc d'extrusion aval d'un second mélange comportant un canal d'extrusion aval, placé en sortie d'une extrudeuse aval, et débouchant dans la paroi inférieure en aval de la lame de profilage amont,
- une lame de profilage aval disposée transversalement en aval du canal d'extrusion aval définissant la partie profilée d'un entrefer pour déterminer un profil transversal du profilé complexe.

Cette tête d'extrusion comporte au moins un chenal, formé par des parois latérales s'étendant dans la direction longitudinale entre la lame de profilage amont et la lame de profilage aval, et par une paroi constituant le fond du chenal, lesdites parois formant ensemble une surface concave ouverte vers l'intérieur de la cavité d'extrusion et définissant un conduit ouvert à ses deux extrémités longitudinales.

La tête d'extrusion selon l'invention se caractérise en ce qu'au moins une ailette, disposée dans le prolongement d'une cloison supportant une paroi latérale, s'étend dans l'entrefer de la lame de profilage aval, de sorte que l'extrémité aval du chenal est située dans ledit entrefer.

Le premier mélange provenant de l'extrudeuse amont rentre donc sous pression dans le chenal et reste en continuité de matière avec le mélange formant la sous-couche en raison de l'ouverture de la concavité du chenal du côté de ladite sous-couche disposée radialement vers l'intérieur par rapport au chenal. La mise en forme de cette partie du premier mélange M1 pénétrant dans le chenal se poursuit tout au long de sa progression dans le chenal.

En sortant du canal d'extrusion aval alimenté par une extrudeuse aval, le second mélange, destiné à former la bande de roulement, vient se mettre en joint avec la surface radialement externe du premier profilé dans l'espace longitudinal situé entre la lame de profilage amont et la lame de profilage aval. Tout au long de sa progression longitudinale dans le chenal entre la sortie de la première lame de profilage et l'entrée de la seconde lame de profilage, la portion du premier mélange destinée à former l'insert n'est pas en contact avec le second mélange, de manière à éviter que le profil de l'insert ne soit déformé par le second mélange, en particulier lorsque le premier et le second mélange ont des rhéologies différentes.

En progressant dans la lame de profilage aval, le mélange formant la bande de roulement voit sa pression interne baisser fortement pour atteindre une pression nulle au niveau de la section de sortie de la lame de profilage aval. Cette rapide décompression engendre des variations de volume du fait de la relaxation des contraintes élastiques présentes dans ce mélange fortement décohésif.

En raison de la présence de l'ailette, la section de sortie située à l'extrémité aval du chenal est disposée dans l'entrefer défini en partie par la lame de profilage aval, au plus près de la section de sortie de la lame de profilage aval. Et, en réalisant la mise en joint de l'insert formé du premier mélange avec le second mélange le plus en aval possible sous la lame de profilage aval, la plupart des contraintes élastiques et des modifications de volume associées présentes dans le second mélange se sont estompées, en raison de la baisse de pression induite par la proximité de la sortie de la lame de profilage aval. Il en résulte une incidence réduite sur la géométrie de l'insert.

La tête d'extrusion selon l'invention peut aussi comprendre isolément, ou en combinaison, les caractéristiques suivantes :

- Les parois du chenal traversent longitudinalement le canal d'extrusion aval de sorte que la portion du premier mélange pénétrant dans ledit chenal et destinée à former un insert circule directement de la sortie de la lame de profilage amont à l'entrée de la lame de profilage aval sans être mise en contact avec le second mélange provenant du canal d'extrusion aval.
- La lame de profilage aval comprend au moins une saillie s'étendant vers l'intérieur de la cavité d'extrusion et destinée à former un sillon longitudinal continu dans le profilé complexe, et dans laquelle le canal d'extrusion aval comprend un élément séparateur s'étendant longitudinalement entre la lame de profilage amont et la lame de profilage aval dans le prolongement longitudinal de ladite saillie en divisant le canal d'extrusion aval en sous-canaux, et dans laquelle une des parois du chenal est formée par la paroi latérale de l'élément séparateur et par la paroi latérale de la saillie située dans son prolongement.
- L'ailette est supportée par la lame de profilage aval, et les cloisons du chenal et l'élément séparateur sont supportés par une voûte radialement externe définissant le canal d'extrusion aval.

- L'ailette est venue de matière avec la lame de profilage aval.
- Ladite ailette est disposée de sorte que, au niveau du raccordement entre la partie aval de la cloison et la partie amont de l'ailette, la paroi de l'ailette formant l'extrémité du chenal et la paroi du chenal portée par la cloison forment entre elles un angle compris entre 165° et 180°.
- Au niveau du raccordement entre la partie aval de la cloison et la partie amont de l'ailette, la paroi de l'ailette et la paroi de la cloison définissant en partie le sous-canal dans lequel circule le second mélange forment entre elles un angle compris entre 180° et 195°.

- L'extrémité aval de l'ailette au niveau de laquelle se situe l'extrémité aval du chenal, est disposée en amont de la sortie de la lame de profilage aval à une distance comprise entre 2mm et 8mm de ladite sortie de la lame de profilage aval.
- L'ailette a une épaisseur comprise entre 2 mm et 5 mm.
- La section transversale d'un chenal par un plan perpendiculaire à la direction longitudinale décroît de façon continue en circulant de l'extrémité amont du chenal jusqu'à l'extrémité aval du chenal, de sorte que ladite section est minimale au niveau de ladite extrémité aval du chenal.
- La section transversale du chenal par un plan perpendiculaire à la direction longitudinale décroît selon un premier gradient en allant de l'extrémité amont du chenal jusqu'à l'amont de la deuxième lame de profilage, et décroît selon un deuxième gradient inférieur au premier gradient, en allant de l'entrée de la deuxième lame de profilage jusqu'à l'extrémité aval du chenal.
- Au niveau de l'extrémité aval du chenal, la section transversale du chenal par un plan perpendiculaire à la direction longitudinale a une forme triangulaire.

L'invention intéresse également une machine de coextrusion d'un profilé constitué de l'assemblage de profilés formés à partir de mélanges de caoutchouc distincts, comprenant :

- une tête d'extrusion selon l'une quelconque des caractéristiques ci-dessus,
- une paroi de profilage disposée en vis-à-vis de la paroi inférieure de la tête d'extrusion et formant un entrefer avec les lames de profilage amont et aval pour l'extrusion des profilés formant le profilé complexe.

La paroi de profilage peut être fixe ou, alternativement, la paroi inférieure de la tête d'extrusion a une forme concave de profil cylindrique d'axe donné s'étendant transversalement, et dont une direction circonférentielle se confond avec la direction longitudinale définissant le sens de progression du profilé dans la cavité d'extrusion. La paroi de profilage est formée par la paroi radialement externe d'un rouleau cylindrique, mobile en rotation autour d'un axe confondu avec l'axe de la paroi inférieure.

L'invention sera mieux comprise à la lecture des figures annexées, qui sont fournies à titre d'exemples et ne présentent aucun caractère limitatif, dans lesquelles :

- La figure 1 représente le profil transversal d'un profilé complexe selon l'art antérieur connu.

- La figure 2 est une vue dans la direction transversale d'une machine d'extrusion supportant une tête d'extrusion selon l'invention.

- La figure 3 est une vue en coupe selon un plan perpendiculaire à la direction longitudinale d'un profilé complexe réalisé à l'aide d'une tête d'extrusion selon l'invention.

- La figure 4 est une vue schématique en perspective de la tête d'extrusion selon l'invention.

- La figure 5 est une vue de détail de la partie de la tête d'extrusion inscrite dans le médaillon de la figure 4.

- La figure 6 est une vue de face de détail de la lame de profilage aval au niveau de la section de sortie du chenal.

- La figure 7 est une vue de détail dans la direction radiale de la lame de profilage aval.

Dans la forme préférée d'exécution de l'invention, servant de base à la présente description, la machine de coextrusion représentée à la figure 2 comprend un rouleau cylindrique 10 entraîné en rotation autour d'un axe 12 par un ensemble moteur (non représenté). Les génératrices du rouleau s'étendent selon une direction transversale DT et forment une paroi d'extrusion définie ici par la paroi radialement externe 11 du rouleau 10.

La tête d'extrusion 2 comprend un bloc d'extrusion amont 3 qui est associé à une extrudeuse 30 fournissant un premier mélange M1 servant de sous-couche, et un bloc d'extrusion aval 4 qui est associé à une extrudeuse aval 40 fournissant un second mélange M2 formant la bande de roulement.

La paroi inférieure radialement interne 20 de la tête d'extrusion 2 a une forme générale cylindrique d'axe 12 qui est placée en vis-à-vis de la paroi radialement externe 11 du rouleau 10. L'espace compris entre la paroi inférieure et la paroi radialement externe du rouleau forme une cavité d'extrusion dans laquelle le mélange sous pression est mis en forme en passant dans les entrefers définis successivement par une lame de profilage amont 32 puis une lame de profilage aval 42 et la paroi radialement externe 11 du rouleau 10.

La distance radiale entre ces deux parois au niveau des deux extrémités transversales est de l'ordre de quelques dixièmes de millimètres pour limiter les fuites de mélange de caoutchouc.

Le rouleau 10 améliore l'entraînement du profilé complexe en cours d'extrusion dans la direction longitudinale DL, et permet en particulier de réduire les effets de bord au niveau de la semelle du profilé complexe en contact avec la paroi radialement externe 11 du rouleau.

Le profilé complexe PC est dirigé dans la direction longitudinale DL vers la partie aval de la machine d'extrusion sur un tapis 13.

De manière alternative, il est tout à fait possible de mettre en oeuvre l'invention à l'aide d'une machine de coextrusion, dite à nez plat, dans laquelle la paroi d'extrusion définissant les entrefers avec les lames de profilage amont et aval et faisant face à la paroi inférieure de la tête d'extrusion est fixe.

Pour la clarté de l'exposé qui suit, il sera fait référence à ce mode alternatif autant que nécessaire, en considérant que, dans la plupart des cas, ce qui sera évoqué pour une machine d'extrusion comportant un rouleau s'applique mutatis mutandis pour une machine d'extrusion à nez plat.

Le sens de rotation R du rouleau détermine le sens de progression du profilé dans la cavité d'extrusion de la machine, lequel est assimilé à la direction longitudinale DL. La direction radiale DR correspond donc à une direction localement perpendiculaire à la direction transversale DT et à la direction longitudinale DL, et le sens radialement dirigé vers l'intérieur ou radialement interne correspond à une orientation vers l'intérieur de la cavité d'extrusion. Ainsi, lorsqu'un premier point est placé dans une position radialement inférieure par rapport à un second point, on entend que la valeur de la distance entre le premier point et le second point selon une direction perpendiculaire à la direction longitudinale et à la direction transversale et orientée selon un sens allant du centre de la cavité vers l'extérieur est positive. De même, et dans la même logique, sont considérés comme équivalents les termes « inférieur » et « radialement inférieur », les termes « supérieur » ou « radialement supérieur », les termes « externe » ou « radialement externe », ou encore les termes « interne » ou « radialement interne ».

La figure 3 représente un profilé complexe PC comprenant un premier profilé P1 constitué d'un premier mélange M1 destiné à former la sous-couche et un second profilé P2 constitué d'un second mélange M2 destiné à former la bande de roulement. Le profil de la bande de roulement comprend des rainures longitudinales P20 intercalées entre des cordons longitudinaux P21.

Ce profilé complexe PC comprend également des inserts longitudinaux P10 constitués du mélange M1, de forme générale triangulaire, et s'élevant dans la direction radiale DR depuis une base fictive P13 située sur la face radialement externe de la sous-couche P1, jusqu'à la surface radialement externe du second profilé P2. Ces inserts longitudinaux P10 sont disposés en bordure d'un cordon longitudinal P21 à la frontière entre le cordon longitudinal P21 et le sillon longitudinal P20. Seule la paroi latérale P11 d'un insert est alors mise en joint avec le mélange M2.

On observe que le fond du sillon P20 du profilé complexe PC2 est formé par le mélange M2 de la sous-couche P1.

La tête d'extrusion selon l'invention a été mise au point pour permettre la réalisation des profilés complexes du type de ceux représentés à la figure 3 et dans lesquels le mélange M2 est de nature décohésive.

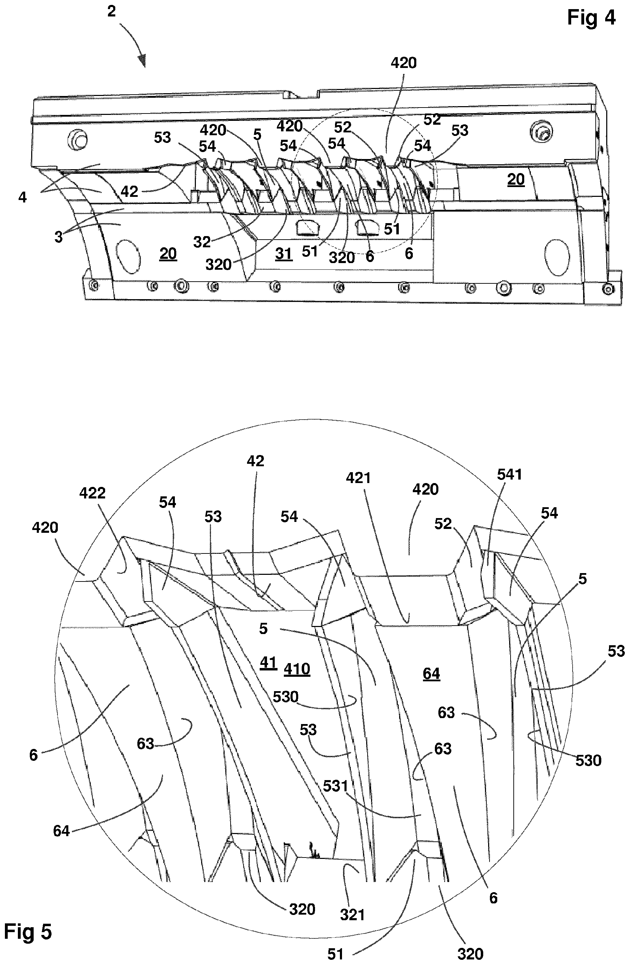

Les figures 4 et 5 permettent de visualiser la tête d'extrusion 2 vue du côté de la paroi inférieure 20.

L'extrudeuse amont (non représentée), dans laquelle est travaillé le premier mélange M1, débouche dans la paroi inférieure 20 par un canal d'extrusion amont 31 en amont (dans le sens de la direction longitudinale DL) d'une lame de profilage amont 32.

Cette lame de profilage amont 32, dont le profil transversal est adapté pour mettre en forme le premier profilé P1 destiné à former la sous-couche, forme un entrefer avec la paroi radialement externe 11 du rouleau 10. Le profilé P1, est du type de celui représenté à la figure 3, et s'étend de manière continue dans la direction transversale DT.

L'extrudeuse aval 40 (non représentée), dans laquelle est travaillé le mélange M2, débouche par un canal d'extrusion aval 41 dans la paroi intérieure 20, en aval de la lame de profilage amont 31 et en amont d'une lame de profilage aval 42.

La tête d'extrusion 2 servant de base à la présente description comprend au moins un élément séparateur 6, disposé dans le prolongement longitudinal d'une saillie 420 de la lame de profilage aval 42, et s'étendant depuis la lame de profilage amont 32 jusqu'à la lame de profilage aval 42. Cet élément séparateur 6 divise ledit second canal d'extrusion 41 en sous- canaux 410.

Toutefois, cet arrangement n'est pas limitatif, et il est tout à fait possible de mettre en oeuvre l'invention lorsque le chenal est formé de deux cloisons dont les parois se font face.

Le flux de mélange M2 provenant du canal d'extrusion aval 41 entre donc en contact avec la partie radialement externe du premier profilé P1 formant la sous-couche dès sa sortie des sous-canaux 410, directement en aval de la lame de profilage amont 32 et bien en amont de la lame de profilage aval 42.

L'entrefer entre la lame de profilage aval 42 et la surface radialement externe 11 du rouleau 10 sert à déterminer le profil transversal du profilé P2 et à parfaire la mise en joint des profilés P1 et P2.

La tête d'extrusion 2, comprend également au moins un chenal 5, qui est distinct du canal d'extrusion aval 41 destiné à la circulation du second mélange M2, et qui s'étend dans la direction longitudinale.

Ce chenal 5 se présente sous la forme d'un canal de section sensiblement triangulaire ou trapézoïdale comprenant :

- une paroi latérale 530 supportée par une cloison 53, et disposée en vis-à-vis de la paroi latérale 63 d'un élément séparateur 6 et,
- une paroi 531 formant le fond du chenal.

Les parois 63, 530 et 531 du chenal 5 forment ensemble une surface concave continue, ouverte radialement vers l'intérieur et dont la concavité fait face à la paroi radialement externe 11 du rouleau 10. Les parois 63, 530 et 531 du chenal 5 définissent en quelque sorte un conduit, à l'image d'une gouttière ou d'une coque renversée ouverte à ses deux extrémités amont 51 et aval 52.

Les parois 63, 530, 531 du chenal 5 qui traversent longitudinalement de part en part la sortie du canal d'extrusion aval 41 depuis la sortie de la lame de profilage amont 32 jusqu'à l'entrée de la lame de profilage aval 42 ont ainsi pour objet d'isoler le chenal 5 du canal d'extrusion aval 41. La hauteur radiale des parois 51 et 52 est ajustée de sorte que le mélange M1 provenant du canal d'extrusion amont 31 et pénétrant dans le chenal 5 puisse circuler dans le chenal depuis le flanc aval 321 de lame de profilage amont 31 et le flanc amont (non visible) de la lame de profilage aval 42 sans être mis en contact avec le second mélange M2 provenant du canal d'extrusion aval 41, tout en restant en continuité de matière avec le premier mélange M1. Le chenal 5 dans lequel circule la part du premier mélange M1 destiné à former l'insert P10 enjambe la sortie du canal d'extrusion aval 41 et va directement de la sortie de la lame de profilage amont 32 à la lame de profilage aval 42 sans entrer en contact avec le second mélange M2 provenant dudit canal d'extrusion aval 41.

Une ailette 54 est disposée dans la prolongation aval de la cloison 53. La paroi latérale de l'ailette 540 placée en vis-à-vis de la paroi latérale 422 de la saillie 420 prolongent le chenal 5 au sein de l'entrefer formé par la lame de profilage aval et la surface radialement externe 11 du rouleau 10.

Il en résulte que l'extrémité aval 52 du chenal est disposée dans l'entrefer au plus près possible de la sortie de la lame de profilage aval 42. La mise en joint du mélange M2 avec la partie de mélange M1 circulant dans le chenal 5 et destinée à former l'insert P10 se fait alors à faible pression, sans incidence sur la géométrie de l'insert, à l'extrémité aval 52 du chenal 5 au niveau de l'entrefer défini par la lame de profilage aval 42 et au plus près possible de la sortie de la lame de profilage aval 42. Il en résulte une grande stabilité géométrique de l'insert.

L'extrémité aval 541 de l'ailette, au niveau de laquelle se situe la section de sortie de l'extrémité aval 52 du chenal 5, peut utilement être disposée, en amont de la sortie de la lame de profilage aval, à une distance d comprise entre 2mm et 5mm de ladite sortie.

De même, pour ne pas perturber les flux en aval de l'ailette, précisément au niveau du raccordement entre les mélanges M1 et M2 de l'insert, l'épaisseur de l'ailette doit être la plus fine possible, et comprise préférentiellement entre 2 mm et 5 mm maximum.

Au niveau de l'extrémité amont 51 du chenal 5, la cloison 53 est raccordée avec le flanc aval 321 de la lame de profilage amont 32, et le bord radialement inférieur de la cloison 53 affleure avec le profil de la lame de profilage amont 32. La lame de profilage amont 32 présente, au niveau de cette extrémité amont 51 du chenal 5, un profil transversal en forme d'exutoire 320, dont la partie aval est disposée en continuité de la paroi 531 formant le fond du chenal, de manière à favoriser l'écoulement du mélange M1 dans le chenal 5.

Au niveau de la saillie 420 de la lame de profilage aval 42, la paroi radialement interne 421 de la saillie, est placée à la même position radiale que la paroi radialement interne 64 de l'élément séparateur 6. Cette paroi 64 se prolonge en amont de ladite saillie 420 et, au niveau de son raccordement avec la lame de profilage amont 32, occupe la même position radiale que la paroi de la lame de profilage amont 32.

Au niveau de l'extrémité aval 52 du chenal 5, le chenal 5 s'ouvre dans l'entrefer formé par la lame de profilage aval 42 et la paroi radialement externe 11 du rouleau 10. Le chenal 5, illustré à la figure 5, est configuré de sorte que la paroi 531 formant le fond du chenal 5 est disposée radialement au même niveau que la position radiale à ce niveau de la lame de profilage aval 42. En revanche, au niveau de cette extrémité aval 52, la cloison 53 et l'ailette 54 s'étendent radialement vers l'intérieur, en vis-à-vis de la paroi latérale 63 de l'élément séparateur 6 et de la paroi latérale 422 de la saillie 420.

Toutefois, s'il n'est pas nécessaire de faire émerger l'insert au niveau de la surface de la bande de roulement ; il est tout à fait possible, au niveau de l'extrémité aval 52 du chenal 5, de disposer la paroi 531 formant le fond du chenal 5 à une position radialement inférieure à celle de la position radiale de la lame de profilage aval 42.

Ainsi, tout en restant en continuité de matière avec le mélange M1 formant la sous-couche, la partie de mélange M1 pénétrant dans le chenal 5 s'écoule directement depuis l'extrémité amont 51 jusqu'à l'extrémité aval 52 sans être mise en contact avec le mélange M2, de sorte que les adaptations de pression observées au niveau du raccordement du flux de mélange M2 avec le flux de mélange M1, n'entraînent aucune perturbation du profil conféré au mélange M1 ayant pénétré dans le chenal 5 et destiné à former l'insert P10. En débouchant puis en circulant dans le canal d'extrusion aval 41, le mélange M2 circule sur le dos extérieur du chenal 5 formé par les parois externes convexes du chenal 5 jusqu'à l'entrée de la lame de profilage aval 42 sans venir en contact avec le mélange M1 circulant dans le chenal 5.

On notera que le second mélange M2 peut en revanche avantageusement, tel que cela a été décrit plus haut, se mettre en joint dans le canal d'extrusion aval 41, et donc bien en amont de la lame de profilage aval 42, avec le reste de la surface radialement externe du premier mélange M1 qui n'est pas protégée par le chenal 5, et qui forme la sous-couche.

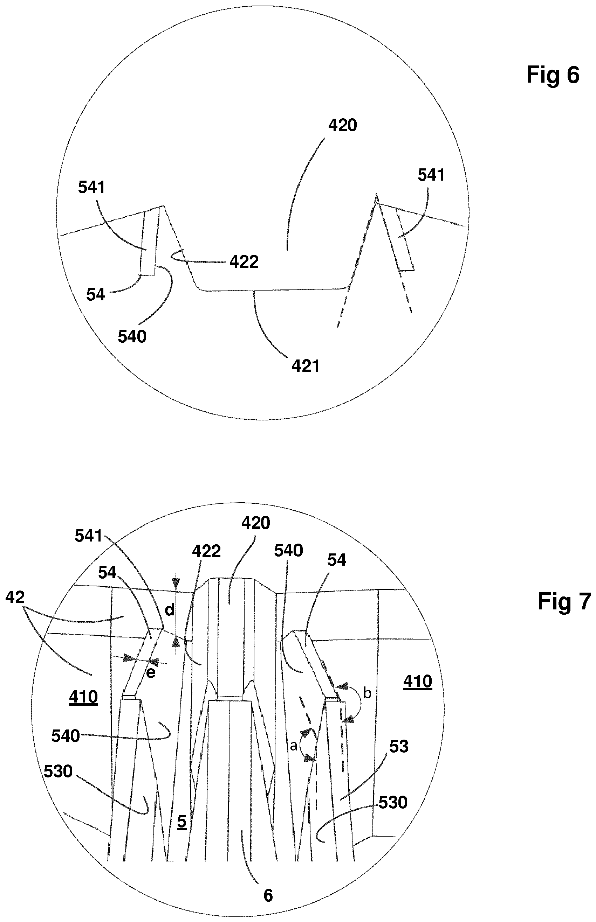

En référence à la figure 7, Il peut également s'avérer utile de modifier l'orientation de l'ailette de sorte que, au niveau du raccordement entre la partie aval de la cloison 53 et la partie amont de l'ailette 54, les plans formés par les parois 530 et 540, portées respectivement par la cloison 53 et par l'ailette 54, forment entre eux un angle a préférentiellement inférieur à 180°.

Avantageusement, on s'arrangera pour que l'ailette 54 soit supportée par la lame de profilage aval 42, et que les cloisons 53 du chenal et l'élément séparateur 6 soient supportés par une voute radialement externe définissant les sous-canaux 410 dans lesquels circule le mélange M2.

Plus avantageusement encore, l'ailette 54 est venue de matière avec la lame de profilage aval 42.

Cette disposition permet de réaliser de manière indépendante la partie de la tête d'extrusion dans laquelle sont disposés les sous-canaux 410, et la lame de profilage aval supportant les ailettes 54.

Il en résulte un coût de mise au point réduit du profil de l'insert. Il suffit en effet de faire varier judicieusement l'angle a de fermeture de l'ailette 54 pour ajuster la section de sortie 52 du chenal tout en conservant constante la position de la ligne de raccordement entre la partie amont de l'ailette et la partie aval de cloison du chenal.

Cet arrangement particulier procure un autre avantage inattendu en ce que, au niveau du raccordement entre la partie aval de la cloison et la partie amont de l'ailette, la paroi de l'ailette et la paroi de la cloison définissant en partie le sous-canal 410 dans lequel circule le mélange M2, forment entre elles un angle b supérieur à 180°.

Cet artifice permet de créer un divergent au niveau de la partie du sous-canal 410 disposé dans l'entrefer défini par la lame de profilage aval 42, ce qui a pour effet de favoriser la libération des contraintes élastiques dans le mélange M2.

Comme cela est illustré schématiquement à la figure 6, la forme de la section de sortie 52 est donnée par les positions respectives de la paroi latérale 540 de l'ailette 54 et de la paroi latérale 422 de la saillie 420. La forme sensiblement triangulaire, illustrée par les lignes en pointillés, correspond à une forme préférentielle de réalisation de l'insert. Toutefois, la forme de cette section n'est pas limitative et peut être adaptée à volonté.

L'évolution de la pression dans le chenal 5 peut être contrôlée en ajustant, par rapport à la direction longitudinale DL, l'angle formé entre la paroi latérale 530 et la paroi latérale 63 de l'élément séparateur, ainsi que l'angle formé entre la paroi latérale 540 de l'ailette 54 et la paroi latérale 422 de la saillie 420. Préférentiellement, ces parois disposées en vis-à-vis convergent l'une vers l'autre, en allant de l'amont vers l'aval, en faisant un angle de l'ordre de 5° avec la direction longitudinale, de sorte que la section transversale du chenal par un plan radial ou par un plan perpendiculaire à la direction longitudinale décroît de manière continue en allant de l'extrémité amont 51 vers l'extrémité aval 52 du chenal, et que ladite section est minimale au niveau de l'extrémité aval 52. Le gradient de la section S du chenal en fonction de la distance *l* longitudinale allant de l'amont vers l'aval est négatif,

$$(\frac{\partial S}{\partial l} < 0)$$

gatif,

Lorsque l'ailette 54 forme un angle avec la paroi 53, la variation de la section du chenal sous la lame de profilage aval 42, $(\frac{\partial S}{\partial l_2})$ est plus forte que la variation de la section du chenal située entre la lame de profilage amont 32 et la lame de profilage aval 42, $(\frac{\partial S}{\partial l_1})$. En d'autres termes, ces deux valeurs étant négatives, il en résulte que $\frac{\partial S}{\partial l_2} < \frac{\partial S}{\partial l_1}$.

Il résulte de ce qui précède, que les différentes formes de mise en oeuvre de l'invention, peuvent faire l'objet de nombreuses combinaisons sans pour autant se départir de l'esprit de l'invention.

De même, on considérera qu'une machine de coextrusion d'un profilé constitué de l'assemblage de profilés formés à partir de mélanges de caoutchouc distincts, comprenant un rouleau cylindrique et une tête d'extrusion selon l'invention entre dans le domaine de protection de la présente demande.

## NOMENCLATURE

| | |
|---|---|
| 1 | Machine de coextrusion. |
| 10 | Rouleau |
| 11 | Paroi radialement externe du rouleau. |
| 12 | Axe de rotation du rouleau. |
| 13 | Tapis d'évacuation. |
| 2 | Tête d'extrusion. |
| 20 | Paroi inférieure. |
| 3 | Bloc d'extrusion amont. |
| 30 | Extrudeuse amont. |
| 31 | Canal d'extrusion amont. |
| 32 | Lame de profilage amont. |
| 320 | Exutoire. |
| 321 | Flanc aval de la lame de profilage amont. |
| 4 | Bloc d'extrusion aval. |
| 40 | Extrudeuse aval. |
| 41 | Canal d'extrusion aval. |
| 410 | Sous-canal. |
| 42 | Lame de profilage aval. |
| 420 | Saillie. |
| 421 | Paroi radialement inférieure de la saillie. |
| 422 | Paroi latérale de la saillie. |
| 5 | Chenal |
| 51 | Extrémité amont du chenal. |
| 52 | Extrémité aval du chenal. |
| 53 | Cloison. |
| 530 | Paroi latérale de la cloison formant le chenal. |
| 531 | Paroi formant le fond du chenal. |
| 54 | Ailette. |
| 540 | Paroi latérale de l'ailette formant le chenal. |
| 541 | Extrémité aval de l'ailette. |

| | |
|---|---|
| 6 | Élément séparateur. |
| 63 | Paroi latérale de l'élément séparateur. |
| 64 | Paroi radialement interne de l'élément séparateur. |
| d | Distance entre l'extrémité aval de l'ailette et la sortie de la lame de profilage aval. |
| R | Sens de rotation du rouleau. |
| DT | Direction transversale. |
| DL | Direction longitudinale ; Sens de progression. |
| PC, PC0 | Profilé complexe. |
| P1 | Premier profilé (sous-couche). |
| P10 | Insert longitudinal. |
| P11 | Paroi latérale de l'insert. |
| P13 | Base de l'insert. |
| P2 | Second profilé (bande de roulement). |
| P20 | Sillon longitudinal. |
| P21 | Cordon longitudinal. |
| M1 | Premier mélange de caoutchouc |
| M2 | Second mélange de caoutchouc. |

## Revendications

1. Tête d'extrusion (2) d'un profilé complexe constitué de l'assemblage de profilés (P1, P2) formés à partir de mélanges de caoutchouc (M1, M2) distincts, destinée à être montée sur une machine de coextrusion (1), dans laquelle les profilés progressent dans une cavité d'extrusion selon un sens d'extrusion allant de l'amont vers l'aval en définissant une direction longitudinale (DL), ladite tête d'extrusion comprenant une paroi inférieure (20) délimitant en partie ladite cavité d'extrusion et, en progressant de l'amont vers l'aval de ladite paroi inférieure (20) dans la direction longitudinale :

   - un bloc d'extrusion amont (3) d'un premier mélange (M1) comportant un canal d'extrusion amont (31), placé en sortie d'une extrudeuse amont (30), et débouchant dans la paroi inférieure (20),
   - une lame de profilage amont (32), disposée transversalement en aval du canal d'extrusion amont (31) définissant la partie profilée d'un entrefer pour déterminer un premier profil transversal d'un premier profilé (P1),
   - un bloc d'extrusion aval (4) d'un second mélange (M2) comportant un canal d'extrusion aval (41), placé en sortie d'une extrudeuse aval (40), et débouchant dans la paroi inférieure (20) en aval de la lame de profilage amont (32),
   - une lame de profilage aval (42) disposée transversalement en aval du canal d'extrusion aval (41) définissant la partie profilée d'un entrefer pour déterminer un profil transversal du profilé complexe (PC),

   ladite tête d'extrusion comportant au moins un chenal (5), formé par des parois latérales (530, 63) s'étendant dans la direction longitudinale entre la lame de profilage amont (32) et la lame de profilage aval (42), et par une paroi (531) constituant le fond du chenal, lesdites parois (530, 63, 531) formant ensemble une surface concave ouverte vers l'intérieur de la cavité d'extrusion et définissant un conduit ouvert à ses deux extrémités longitudinales (51, 52) **caractérisée en ce que** au moins une ailette (54), disposée dans le prolongement d'une cloison (53) supportant une paroi latérale (530), s'étend dans l'entrefer de la lame de profilage aval (42), de sorte que l'extrémité aval (52) du chenal (5) est située dans ledit entrefer.

2. Tête d'extrusion selon la revendication 1, dans laquelle les parois du chenal (5) traversent longitudinalement le canal d'extrusion aval (41) de sorte que la portion du premier mélange M1 pénétrant dans ledit chenal (5) et destinée à former un insert (P10) circule directement de la sortie de la lame de profilage amont (32) à l'entrée de la lame de profilage aval (42) sans être mise en contact avec le second mélange (M2) provenant du canal d'extrusion aval (41).

3. Tête d'extrusion (2) selon la revendication 1 ou la revendication 2, dans laquelle la lame de profilage aval (42) comprend au moins une saillie (420) s'étendant vers l'intérieur de la cavité d'extrusion et destinée à former un sillon longitudinal (P20) continu dans le profilé complexe (PC), et dans laquelle le canal d'extrusion aval (41) comprend un élément séparateur (6) s'étendant longitudinalement entre la lame de profilage amont (32) et la lame de profilage aval (42) dans le prolongement longitudinal de ladite saillie (420) en divisant le canal d'extrusion aval (41) en sous-canaux (410), et dans laquelle une des parois du chenal (5) est formée par la paroi latérale (63) de l'élément séparateur (6) et par la paroi latérale (422) de la saillie (420) située dans son prolongement.

4. Tête d'extrusion (2) selon la revendication 3 dans laquelle :

   - l'ailette (54) est supportée par la lame de profilage aval (42) et
   - les cloisons (53) du chenal et l'élément séparateur (6) sont supportés par une voute radialement externe définissant le canal d'extrusion aval.

5. Tête d'extrusion (2) selon la revendication 4, dans laquelle l'ailette (54) est venue de matière avec la lame de profilage aval (42).

6. Tête d'extrusion selon l'une quelconque des revendications 1 à 5, dans laquelle ladite ailette (54) est disposée de sorte que, au niveau du raccordement entre la partie aval de la cloison (53) et la partie amont de l'ailette (54), la paroi (540) de l'ailette (54) formant l'extrémité du chenal et la paroi (530) du chenal portée par la cloison (53) forment entre elles un angle (a) compris entre 165° et 180°.

7. Tête d'extrusion (2) selon la revendication 6, dans laquelle, au niveau du raccordement entre la partie aval de la cloison (53) et la partie amont de l'ailette (54), la paroi de l'ailette (54) et la paroi de la cloison (53) définissant en partie le sous-canal (410) dans lequel circule le second mélange (M2) forment entre elles un angle (b) compris entre 180° et 195°.

8. Tête d'extrusion (2) selon l'une quelconque des revendications 1 à 7, dans laquelle l'extrémité aval (541) de l'ailette (54) au niveau de laquelle se situe l'extrémité aval (52) du chenal (5), est disposée en amont de la sortie de la lame de profilage aval (42) à une distance comprise entre 2mm et 8mm de ladite sortie de la lame de profilage aval.

9. Tête d'extrusion (2) selon l'une quelconque des revendications 1 à 8 dans laquelle l'ailette a une épaisseur (e) comprise entre 2 mm et 5 mm.

10. Tête d'extrusion (2) selon l'une quelconque des revendications 1 à 9, dans laquelle la section transversale S d'un chenal par un plan perpendiculaire à la direction longitudinale décroît de façon continue en circulant de l'extrémité amont (51) du chenal jusqu'à l'extrémité aval (52) du chenal $(\frac{\partial S}{\partial l} < 0)$, de sorte que ladite section est minimale au niveau de ladite extrémité aval (52) du chenal (5).

11. Tête d'extrusion (2) selon la revendication 10, dans laquelle la section transversale du chenal (5) par un plan perpendiculaire à la direction longitudinale décroît selon un premier gradient $(\frac{\partial S}{\partial l}_1)$ en allant de l'extrémité amont du chenal (51) jusqu'à l'amont de la deuxième lame de profilage (42), et décroît selon un deuxième gradient $(\frac{\partial S}{\partial l}_2)$ inférieur au premier gradient $(\frac{\partial S}{\partial l}_2 < \frac{\partial S}{\partial l}_1)$, en allant de l'entrée de la deuxième lame de profilage (42) jusqu'à l'extrémité aval (52) du chenal (5).

12. Tête d'extrusion (2) selon l'une quelconque des revendications 1 à 11, dans laquelle, au niveau de l'extrémité aval (52) du chenal, la section transversale du chenal (5) par un plan perpendiculaire à la direction longitudinale (DL) a une forme triangulaire.

13. Machine de coextrusion (1) d'un profilé constitué de l'assemblage de profilés (P1, P2) formés à partir de mélanges de caoutchouc distincts (M1, M2), comprenant :

    - une tête d'extrusion (2) selon l'une quelconque des revendications 1 à 12,
    - une paroi de profilage (11) disposée en vis-à-vis de la paroi inférieure de la tête d'extrusion et formant un entrefer avec les lames de profilage amont et aval (32, 42) pour l'extrusion des profilés (P1, P2) formant le profilé complexe (PC).

14. Machine de coextrusion (1) selon la revendication 13, dans laquelle la paroi de profilage est fixe.

15. Machine de coextrusion (1) selon la revendication 13 dans laquelle :

    - la paroi inférieure (20) de la tête d'extrusion (2) a une forme concave de profil cylindrique d'axe (12) donné s'étendant transversalement, et dont une direction circonférentielle se confond avec la direction longitudinale (DL) définissant le sens de progression du profilé dans la cavité d'extrusion et,
    - la paroi de profilage est formée par la paroi radialement externe (11) d'un rouleau cylindrique (10), mobile en rotation autour d'un axe (12) confondu avec l'axe (12) de la paroi inférieure (20).

## Patentansprüche

1. Kopf (2) zum Extrudieren eines komplexen Profilabschnitts, der aus der Zusammenfügung von Profilabschnitten (P1, P2), die aus unterschiedlichen Kautschukmischungen (M1, M2) gebildet sind, besteht, bestimmt für die Montage an einer Koextrusionsmaschine (1), wobei sich die Profilabschnitte in einem Extrusionshohlraum gemäß einer Extrusionsrichtung, die von einer stromaufwärtigen Seite zu einer stromabwärtigen Seite verläuft, vorwärts bewegen und dabei eine Längsrichtung (DL) definieren, wobei der Extrusionskopf eine untere Wand (20), die den Extrusionshohlraum teilweise begrenzt, und, in Längsrichtung von der stromaufwärtigen Seite zu der stromabwärtigen Seite der unteren Wand (20) verlaufend, Folgendes beinhaltet:

    - einen stromaufwärtigen Extrusionsblock (3) für eine erste Mischung (M1), der einen stromaufwärtigen Extrusionskanal (31) umfasst, der am Ausgang eines stromaufwärtigen Extruders (30) platziert ist und an der unteren Wand (20) mündet,

- ein stromaufwärtiges Profilierungswerkzeug (32), das stromabwärts zu dem stromaufwärtigen Extrusionskanal (31) in Querrichtung angeordnet ist und den profilierten Teil eines Spalts definiert, um ein erstes Querprofil eines ersten Profilabschnitts (P1) zu bestimmen,
- einen stromabwärtigen Extrusionsblock (4) für eine zweite Mischung (M2), der einen stromabwärtigen Extrusionskanal (41) umfasst, der am Ausgang eines stromabwärtigen Extruders (40) platziert ist und stromabwärtig zu dem stromaufwärtigen Profilierungswerkzeug (32) an der unteren Wand (20) mündet,
- ein stromabwärtiges Profilierungswerkzeug (42), das stromabwärts zu dem stromabwärtigen Extrusionskanal (41) in Querrichtung angeordnet ist und den profilierten Teil eines Spalts definiert, um ein Querprofil des komplexen Profilabschnitts (PC) zu bestimmen,

wobei der Extrusionskopf mindestens eine Rinne (5) umfasst, die durch Seitenwände (530, 63), die sich in Längsrichtung zwischen dem stromaufwärtigen Profilierungswerkzeug (32) und dem stromabwärtigen Profilierungswerkzeug (42) erstrecken, und durch eine Wand (531), die den Boden der Rinne darstellt, gebildet wird, wobei die Wände (530, 63, 531) zusammen eine nach innen offene, konkave Oberfläche des Extrusionshohlraums bilden und eine Leitung definieren, die an ihren beiden Längsenden (51, 52) offen ist, **dadurch gekennzeichnet, dass** sich mindestens ein Flügel (54), der in der Verlängerung einer Trennwand (53), die eine Seitenwand (530) stützt, angeordnet ist, in dem Spalt des stromabwärtigen Profilierungswerkzeugs (42) erstreckt, sodass sich das stromabwärtige Ende (52) der Rinne (5) in dem Spalt befindet.

**2.** Extrusionskopf nach Anspruch 1, wobei die Wände der Rinne (5) den stromabwärtigen Extrusionskanal (41) in Längsrichtung durchqueren, sodass der Anteil der ersten Mischung M1, der in die Rinne (5) eindringt und dazu bestimmt ist, einen Einsatz (P10) zu bilden, direkt von dem Ausgang des stromaufwärtigen Profilierungswerkzeugs (32) zu dem Eingang des stromabwärtigen Profilierungswerkzeugs (42) zirkuliert, ohne dabei mit der zweiten Mischung (M2), die von dem stromabwärtigen Extrusionskanal (41) kommt, in Kontakt zu kommen.

**3.** Extrusionskopf (2) nach Anspruch 1 oder Anspruch 2, wobei das stromabwärtige Profilierungswerkzeug (42) mindestens einen Vorsprung (420) beinhaltet, der sich zum Inneren der Extrusionshohlraums erstreckt und dazu bestimmt ist, eine kontinuierliche Längsrille (P20) in dem komplexen Profilabschnitt (PC) zu bilden, und wobei der stromabwärtige Extrusionskanal (41) ein Trennelement (6) beinhaltet, das sich in der Längsverlängerung des Vorsprungs (420) in Längsrichtung zwischen dem stromaufwärtigen Profilierungswerkzeug (32) und dem stromabwärtigen Profilierungswerkzeug (42) erstreckt und dabei den stromabwärtigen Extrusionskanal (41) in Unterkanäle (410) unterteilt, und wobei eine der Wände der Rinne (5) durch die Seitenwand (63) des Trennelements (6) und durch die Seitenwand (422) des Vorsprungs (420), die sich in ihrer Verlängerung befindet, gebildet wird.

**4.** Extrusionskopf (2) nach Anspruch 3, wobei:

- der Flügel (54) durch das stromabwärtige Profilierungswerkzeug (42) gestützt wird und
- die Trennwände (53) der Rinne und das Trennelement (6) durch ein radial außen liegendes Gewölbe gestützt werden, das den stromabwärtigen Extrusionskanal definiert.

**5.** Extrusionskopf (2) nach Anspruch 4, wobei der Flügel (54) mit dem stromabwärtigen Profilierungswerkzeug (42) einstückig ausgebildet ist.

**6.** Extrusionskopf nach einem beliebigen der Ansprüche 1 bis 5, wobei der Flügel (54) so angeordnet ist, dass im Bereich der Verbindung zwischen dem stromabwärtigen Teil der Trennwand (53) und dem stromaufwärtigen Teil des Flügels (54) die Wand (540) des Flügels (54), die das Ende der Rinne bildet, und die Wand (530) der Rinne, die durch die Trennwand (53) getragen wird, zwischen sich einen Winkel (a) zwischen 165° und 180° bilden.

**7.** Extrusionskopf (2) nach Anspruch 6, wobei im Bereich der Verbindung zwischen dem stromabwärtigen Teil der Trennwand (53) und dem stromaufwärtigen Teil des Flügels (54) die Wand des Flügels (54) und die Wand der Trennwand (53), die teilweise den Unterkanal (410), in dem die zweite Mischung (M2) zirkuliert, definiert, zwischen sich einen Winkel (b) zwischen 180° und 195° bilden.

**8.** Extrusionskopf (2) nach einem beliebigen der Ansprüche 1 bis 7, wobei das stromabwärtige Ende (541) des Flügels (54), in dessen Bereich sich das stromabwärtige Ende (52) der Rinne (5) befindet, stromaufwärtig zu dem Ausgang des stromabwärtigen Profilierungswerkzeugs (42) angeordnet ist, mit einem Abstand zwischen 2 mm und 8 mm von dem Ausgang des stromabwärtigen Profilierungswerkzeugs.

**9.** Extrusionskopf (2) nach einem beliebigen der Ansprüche 1 bis 8, wobei der Flügel eine Dicke (e) zwischen 2 mm und 5 mm aufweist.

10. Extrusionskopf (2) nach einem beliebigen der Ansprüche 1 bis 9, wobei der Querschnitt S einer Rinne durch eine zu der Längsrichtung senkrechte Ebene von dem stromaufwärtigen Ende (51) der Rinne bis zu dem stromabwärtigen Ende (52) der Rinne kontinuierlich abnimmt ($\frac{\delta S}{\delta l} < 0$), sodass der Querschnitt im Bereich des stromabwärtigen Endes (52) der Rinne (5) am kleinsten ist.

11. Extrusionskopf (2) nach Anspruch 10, wobei der Querschnitt der Rinne (5) durch eine zu der Längsrichtung senkrechte Ebene von dem stromaufwärtigen Ende der Rinne (51) bis zu der stromaufwärtigen Seite des zweiten Profilierungswerkzeugs (42) gemäß einem ersten Gradienten ($\frac{\delta S}{\delta l_1}$) abnimmt und von dem Eingang des zweiten Profilierungswerkzeugs (42) bis zu dem stromabwärtigen Ende (52) der Rinne (5) gemäß einem zweiten Gradienten ($\frac{\delta S}{\delta l_2}$), der kleiner als der erste Gradient ist ($\frac{\delta S}{\delta l_2} < \frac{\delta S}{\delta l_1}$), abnimmt.

12. Extrusionskopf (2) nach einem beliebigen der Ansprüche 1 bis 11, wobei im Bereich des stromabwärtigen Endes (52) der Rinne der Querschnitt der Rinne (5) durch eine zu der Längsrichtung (DL) senkrechte Ebene eine Dreiecksform aufweist.

13. Koextrusionsmaschine (1) für einen Profilabschnitt, der aus der Zusammenfügung von Profilabschnitten (P1, P2), die aus unterschiedlichen Kautschukmischungen (M1, M2) gebildet sind, besteht, beinhaltend:

    - einen Extrusionskopf (2) nach einem beliebigen der Ansprüche 1 bis 12,
    - eine Profilierungswand (11), die gegenüber der unteren Wand des Extrusionskopfes angeordnet ist und zusammen mit dem stromaufwärtigen und dem stromabwärtigen Profilierungswerkzeug (32, 42) einen Spalt für die Extrusion der Profilabschnitte (P1, P2), die den komplexen Profilabschnitt (PC) bilden, bildet.

14. Koextrusionsmaschine (1) nach Anspruch 13, wobei die Profilierungswand fest ist.

15. Koextrusionsmaschine (1) nach Anspruch 13, wobei:

    - die untere Wand (20) des Extrusionskopfes (2) eine konkave Form mit einem zylindrischen Profil einer gegebenen Achse (12) aufweist, die sich in Querrichtung erstreckt und bei der eine Umfangsrichtung mit der Längsrichtung (DL), die die Vorschubrichtung des Profilabschnitts in dem Extrusionshohlraum definiert, zusammenfällt, und
    - die Profilierungswand durch die radial außen liegende Wand (11) einer zylindrischen Walze (10) gebildet wird, die um eine Achse (12), die mit der Achse (12) der unteren Wand (20) zusammenfällt, drehbeweglich ist.

## Claims

1. Extrusion head (2) for extruding a complex profiled element made up of the assembly of profiled elements (P1, P2) formed from distinct rubber compounds (M1, M2), said extrusion head (2) being intended to be mounted on a coextrusion machine (1), in which the profiled elements progress through an extrusion cavity in a direction of extrusion extending from upstream to downstream, defining a longitudinal direction (DL), said extrusion head comprising a lower wall (20) that partially delimits said extrusion cavity and, from upstream to downstream of said lower wall (20) in the longitudinal direction (DL):

    - an upstream extrusion unit (3) for extruding a first compound (M1), having an upstream extrusion canal (31), which is positioned at the outlet of an upstream extruder (30) and opens into the lower wall (20),
    - an upstream profiling blade (32), which is disposed transversely downstream of the upstream extrusion canal (31) that defines the profiled part of a gap for determining a first transverse profile of a first profiled element (P1),
    - a downstream extrusion unit (4) for extruding a second compound (M2), having a downstream extrusion canal (41), which is positioned at the outlet of a downstream extruder (40) and opens into the lower wall (20) downstream of the upstream profiling blade (32),
    - a downstream profiling blade (42), which is disposed transversely downstream of the downstream extrusion canal (41) that defines the profiled part of a gap for determining a transverse profile of the complex profiled element (PC),

    said extrusion head having at least one channel (5), formed by lateral walls (530, 63) that extend in the longitudinal direction between the upstream profiling blade (32) and the downstream profiling blade (42), and by a wall (531) that forms the bottom of the channel, said walls (530, 63, 531) together forming a concave surface that is open towards the inside of the extrusion cavity and defining a duct that is open at its two longitudinal ends (51, 52), **characterized in that** at least one fin (54), which is disposed in the continuation of a partition (53) that supports a lateral wall (530), extends into the gap of the downstream profiling blade (42) such that the downstream end (52) of the channel (5) is situated in said gap.

2. Extrusion head according to Claim 1, wherein the walls of the channel (5) pass longitudinally through the downstream extrusion canal (41) such that the portion of the first compound (M1) that penetrates into said channel (5) and is intended to form an insert (P10) circulates directly from the outlet of the upstream profiling blade (32) to the inlet of the downstream profiling blade (42) without being placed in contact with the second compound (M2) coming from the downstream extrusion canal (41).

3. Extrusion head (2) according to Claim 1 or Claim 2, wherein the downstream profiling blade (42) comprises at least one projection (420) that extends towards the inside of the extrusion cavity and is intended to form a continuous longitudinal furrow (P20) in the complex profiled element (PC), and wherein the downstream extrusion canal (41) comprises a separating element (6) that extends longitudinally between the upstream profiling blade (32) and the downstream profiling blade (42) in the longitudinal continuation of said projection (420), dividing the downstream extrusion canal (41) into sub-canals (410), and wherein one of the walls of the channel (5) is formed by the lateral wall (63) of the separating element (6) and by the lateral wall (422) of the projection (420) situated in the continuation thereof.

4. Extrusion head (2) according to Claim 3, wherein:

   - the fin (54) is supported by the downstream profiling blade (42) and
   - the partitions (53) of the channel and the separating element (6) are supported by a radially external dome that defines the downstream extrusion canal.

5. Extrusion head (2) according to Claim 4, wherein the fin (54) is formed as one with the downstream profiling blade (42).

6. Extrusion head according to any one of Claims 1 to 5, wherein said fin (54) is disposed such that, at the point where the downstream part of the partition (53) and the upstream part of the fin (54) meet, the wall (540) of the fin (54) that forms the end of the channel and the wall (530) of the channel that is carried by the partition (53) form an angle (a) of between 165° and 180° with one another.

7. Extrusion head (2) according to Claim 6, wherein, at the point where the downstream part of the partition (53) and the upstream part of the fin (54) meet, the wall of the fin (54) and the wall of the partition (53) that partially defines the sub-canal (410) in which the second compound (M2) circulates form an angle (b) of between 180° and 195° with one another.

8. Extrusion head (2) according to any one of Claims 1 to 7, wherein the downstream end (541) of the fin (54) at which the downstream end (52) of the channel (5) is situated is disposed upstream of the outlet of the downstream profiling blade (42), at a distance of between 2 mm and 8 mm from said outlet of the downstream profiling blade.

9. Extrusion head (2) according to any one of Claims 1 to 8, wherein the fin has a thickness (e) of between 2 mm and 5 mm.

10. Extrusion head (2) according to any one of Claims 1 to 9, wherein the transverse cross section S of a channel on a plane perpendicular to the longitudinal direction decreases continuously by circulating from the upstream end (51) of the channel to the downstream end (52) of the channel ( $\frac{\partial s}{\partial l} < 0$ ), such that said cross section is at a minimum at said downstream end (52) of the channel (5).

11. Extrusion head (2) according to Claim 10, wherein the transverse cross section of the channel (5) on a plane perpendicular to the longitudinal direction decreases along a first gradient $\left(\frac{\partial s}{\partial l}_1\right)$ from the upstream end of the channel (51) to upstream of the second profiling blade (42), and decreases along a second gradient ( $\frac{\partial s}{\partial l}_2$ ), which is lower than the first gradient ( $\frac{\partial s}{\partial l}_2 < \frac{\partial s}{\partial l}_1$ ), from the inlet of the second profiling blade (42) to the downstream end (52) of the channel (5).

12. Extrusion head (2) according to any one of Claims 1 to 11, wherein, at the downstream end (52) of the channel, the transverse cross section of the channel (5) on a plane perpendicular to the longitudinal direction (DL) has a triangular shape.

13. Coextrusion machine (1) for coextruding a profiled element made up of the assembly of profiled elements (P1, P2) formed from distinct rubber compounds (M1, M2), comprising:

   - an extrusion head (2) according to any one of Claims 1 to 12,

- a profiling wall (11) that is disposed opposite the lower wall of the extrusion head and forms a gap with the upstream and downstream profiling blades (32, 42) for extruding profiled elements (P1, P2) that form the complex profiled element (PC).

14. Coextrusion machine (1) according to Claim 13, wherein the profiling wall is fixed.

15. Coextrusion machine (1) according to Claim 13, wherein:

- the lower wall (20) of the extrusion head (2) has a concave shape with a cylindrical profile, the given axis (12) of which extends transversely, and a circumferential direction of which coincides with the longitudinal direction (DL) defining the direction of progress of the profiled element through the extrusion cavity, and
- the profiling wall is formed by the radially external wall (11) of a cylindrical roller (10) that is rotatable about an axis (12) that coincides with the axis (12) of the lower wall (20).

Fig1

Fig 2

Fig 3

Fig 4

Fig 5

Fig 6

Fig 7

## RÉFÉRENCES CITÉES DANS LA DESCRIPTION

**Documents brevets cités dans la description**

- WO 2017109393 A1
- KR 101405064 B1
- EP 1448355 A
- EP 0925903 A
- WO 2016202703 A